# EUROPEAN PATENT APPLICATION

(11) **EP 4 617 246 A1**
(43) Date of publication of application: **17.09.2025**
(21) Application number: 24163608.3
(22) Date of filing: 14.03.2024
(51) Int. Cl.: C04B 20/02, C04B 20/04, C04B 7/345, C04B 40/02

(54) **METHOD FOR PRODUCING A CARBONATABLE BINDER COMPOSITION**

(71) Applicant: VITO NV, 2400 Mol (BE)
(72) Inventor: PEYS, Arne, 2400 Mol (BE); PIRES MARTINS, Natália, 2400 Mol (BE); QUAGHEBEUR, Mieke, 2400 Mol (BE)
(74) Representative: AWA Benelux

(57) **Abstract**

The present invention relates to a method for producing a carbonatable binder composition comprising a mixed Ca-Mg silicate, wherein the method comprises forming a mixed Ca-Mg silicate by heating a reactive mixture to a temperature between 800 °C and 1400 °C, thereby obtaining the carbonatable binder composition, wherein the reactive mixture comprises between 40 and 90 % by weight of a mineral source material comprising a Mg-comprising silicate, and between 60 and 10 % by weight of a Ca-comprising compound, wherein a molar ratio of elemental Mg to elemental Si in the mineral source material is between 5:1 and 1:5, and wherein the Ca-comprising compound is capable of reacting with the Mg-comprising silicate. The invention further relates to a carbonatable binder composition comprising at least 10 % by weight of akermanite.

## Description

### Technical field

The present invention is related to a method for producing a carbonatable binder composition, i.e. a binder composition that is capable to react with CO₂ during a carbonation reaction. The invention is further related to such carbonatable binder compositions.

### Background art

Cements enable the manufacture of a wide variety of building materials and structures such as mortar, concrete or stucco. Upon hydraulic setting, i.e. exposure to or being contacted with water, the cement phase acts as an adhesive for other components or articles and imparts strength thereto. However, cement manufacturing, usually carried out at temperatures of around 1450 °C, is an energy-intensive process that releases high quantities of CO₂.

An approach to limit the overall release of CO₂ is the use of carbonatable binder materials which develop strength by reaction with CO₂. Consequently, the CO₂ consumed during the hardening process at least partially counterbalances the CO₂ produced during manufacturing of the carbonatable binder material.

Particularly interesting carbonatable binder materials are calcium silicate (Ca-silicate) based binder materials. An advantage of calcium silicates is that they are abundantly present in natural mineral materials, but also in by-products of mining processes and metal production processes.

A wide variety of industrial by-products and waste streams have proven to be suitable for use in carbonatable binder materials, including fly ash, mine tailings and metal or furnace slags resulting from the production of steel, stainless steel and other metallic materials.

Further, such industrial by-products or waste streams often also comprise Mg-silicates. However, Mg-silicates show lower reactivity to CO₂, requiring high temperatures (> 100 °C) and high pressures (> 50 bar), often in combination with the use of chemical additives, to reach an acceptable conversion. Consequently, these Mg-silicates typically do not carbonate during the carbonation conditions used for the Ca-silicates, leading to inferior carbonated (i.e. carbonate bonded) articles, e.g. carbonated articles having insufficient mechanical strength (e.g. compressive strength).

EP 3 694 818 discloses a method of producing a binder composition which can be hardened by both hydration and carbonation. The method comprises heating a starting material to 600-1200 °C for 1 minute to 5 hours to convert at most 80 % of the starting material. The starting material comprises CaO, SiO₂, up to 30 wt.% of other elements than CaO and SiO with regard to the total mass calculated as oxides, and the molar ratio of Ca to Si is between 0.5 and 1.8 The binder composition comprises a hydratable material, which comprises at most 10 wt.% monocalcium silicate, at least 15 wt.% dicalcium silicate, at least 3 wt.% CaO, less than 10 wt.% wollastonite, and from 20 to 80 wt.% phases from the raw materials and/or formed during the transformation step e.g. quartz, Ca₃Si₂O₇, Ca₃SiO₅, Ca₃Al₂O₆, Ca₄Al₂Fe₂O₁₀, gehlenite, merwenite, altered hydrated phases, glassy and/or X-ray amorphous components, and other rock- and soil-forming minerals. Although some akermanite seemed to be present, it was found to have a negative impact on the carbonation.

EP 3 177 578 discloses a carbonatable Ca-silicate composition that can be carbonated with CO₂ at a temperature between 30 °C and 90 °C to form CaCO₃ with a mass gain of at least 10 %. The composition comprises 30 % by weight of one or more discrete, crystalline Ca-silicate phases selected from CaSiOs, Ca₃Si₂O₇ and Ca₂SiO₄, and an amorphous Ca-silicate phase, based on the total weight of the Ca-silicate phases, as well as at most 30 % by weight of metal oxides of Al, Fe and Mg. The composition comprises Ca and Si in a molar ratio of elemental Ca to elemental Si between 0.8 and 1.2. The composition can further comprise one or more inert phases (i.e., non-carbonatable under typical carbonation conditions) such as melilite type minerals (for example gehlenite or akermanite) with the general formula (Ca,Na,K)₂ [(Mg, Fe²⁺,Fe³⁺,Al,Si)₃O₇] or ferrite type phases with the general formula Ca₂(Al, Fe³⁺)₂O₅. The composition may further comprise magnesium silicate in naturally-occurring or synthetic form(s) ranging from trace amount (1%>) to about 50%> or more by weight. In order to obtain a sufficient degree of carbonation and a sufficient strength of the obtained carbonate bonded article, at least 30 % by weight of reactive phases (crystalline and amorphous Ca-silicate) are required, whereas the amount of metal oxides of Al, Fe and Mg should be limited to a maximum of 30 % by weight.

A disadvantage of the foregoing methods of producing carbonatable binder compositions is the significant amount of calcium present as Ca-silicates that is required as active components in the binder composition, which means the production of significant amounts of CO₂ during manufacturing of the binder compositions, the potential use or valorisation of Mg-silicate resources is restricted, and the maximal strength might not result after carbonation. Further, the Ca-silicate compositions may include quantities of inert phases that are non-carbonatable under typical carbonation conditions, and which is expected to have a negative impact on the compressive strength development during carbonation.

### Summary of the invention

The present invention aims to overcome one or more of the above drawbacks. It is an aim to provide a method for producing a carbonatable binder composition that can be carbonated at mild temperatures and CO₂ pressure, thereby producing carbonate bonded articles having a high compressive strength. Yet another aim of the invention is to provide methods that allow the conversion of a wide range of industrial waste streams and by-products, in particular mine tailings and metal slags, typically comprising Mg-silicates and mixed Ca-Mg-silicates, into a carbonatable binder composition, in particular a carbonatable binder composition that can be carbonated at mild temperatures and CO₂ pressure. In other words, it is an aim of the invention to provide valorisation methods for Mg-silicate and mixed Ca-Mg-silicates comprising industrial by-products (in particular slags and tailings) and waste streams, thereby also reducing the environmental footprint of industrial processes producing these by-products (e.g. the production of steel), since the by-products do no longer needs to be disposed of, for example by landfilling.

It is a further aim to provide a method for producing a carbonatable binder composition which, upon carbonation, in particular carbonation in mild conditions, provides mechanical properties, in particular mechanical strength such as compressive strength, similar or even better than existing carbonatable binder compositions comprising or based on Ca-silicates. A further aim is to provide a method for producing a carbonatable binder composition which, upon carbonation, provides articles having an excellent resistance against water, and thus to any possible damage imparted by water.

Yet another aim is to provide a carbonatable binder composition which allows to obtain carbonate bonded articles having mechanical properties, in particular mechanical strength, similar or even better than existing carbonate bonded articles. A further aim is to provide a carbonatable binder composition which allows to obtain carbonate bonded articles having an excellent resistance against water, and thus to any possible damage imparted by water.

The term "carbonatable binder composition" is used interchangeably with "binder composition" in the present disclosure, and is used for a binder composition that is capable to undergo a carbonation reaction, i.e. that is capable to react with CO₂. Upon reaction with CO₂, i.e. during the carbonatation reaction, the binder composition advantageously hardens, thereby obtaining a carbonate bonded article. When applied between materials or articles that need to be connected or bonded together, the carbonatable binder composition will provide a bond upon exposure to CO₂, thereby imparting mechanical strength.

Advantageously, the term "carbonatable binder composition" is used in the present disclosure for a non-hydraulic binder composition, i.e. a binder composition that does not require exposure to, or being contacted with, water to react and form a binder that binds the materials, articles or components that need to be connected or bonded.

The terms "carbonate bonded article" and "carbonated article" are used interchangeably in the present disclosure, and refer to an article obtained by carbonation of a carbonatable binder composition.

According to a first aspect of the present disclosure, there is provided a method for producing a carbonatable binder composition as set out in the appended claims.

The carbonatable binder composition produced by the method of the first aspect comprises a mixed Ca-Mg silicate.

The method comprises heating a reactive mixture to a temperature between 800 °C and 1400 °C, preferably between 1000 °C and 1375 °C, more preferably between 1200 °C and 1375 °C, thereby forming a mixed Ca-Mg silicate and obtaining the carbonatable binder composition.

The reactive mixture comprises between 40 and 90 % by weight, preferably between 45 and 85 % by weight, more preferably between 50 and 80 % by weight of a mineral source material, based on the total weight of the reactive mixture.

The reactive mixture comprises between 60 and 10 % by weight, preferably between 55 and 15 % by weight, more preferably between 50 and 20 % by weight of a Ca-comprising compound, based on the total weight of the reactive mixture.

The mineral source material comprises or substantially consists of a Mg-comprising silicate, i.e. one or a plurality of Mg-comprising silicate(s).

The molar ratio of elemental Mg to elemental Si in the mineral source material is between 5:1 and 1:5, preferably between 2:1 and 1:2.

The Ca-comprising compound is capable of reacting with the Mg-comprising silicate, advantageously upon heating the reactive mixture to a temperature between 800 °C and 1400 °C.

Advantageously, the Ca-comprising compound comprises or substantially consists of a Ca-comprising carbonate. The Ca-comprising carbonate advantageously comprises or substantially consists of one or more of calcite, aragonite, chalk, limestone or dolomite. Advantageously, the Ca-comprising carbonate comprises or substantially consists of CaCO₃.

Advantageously, the Mg-comprising silicate is MgSiO₃ or Mg₂SiO₄. In other words, the mineral source material advantageously comprises or substantially consists of MgSiO₃ and/or Mg₂SiO₄.

The mineral source material may further comprise iron (Fe), i.e. an Fe-comprising compound. Advantageously, the mineral source material comprises equal to or lower than 20 % by weight, preferably equal to or lower than 15 % by weight, more preferably equal to or lower than 10 % by weight, most preferably equal to or lower than 5 % by weight, such as at most 4 % by weight of Fe, based on the total weight of the mineral source material, wherein the amount of Fe is expressed as Fe oxide in the mineral source material.

Advantageously, the mineral source material further comprises a calcium-comprising silicate, for example a Ca-silicate. Advantageously, the mineral source material comprises equal to or lower than 20 % by weight, preferably equal to or lower than 15 % by weight, more preferably equal to or lower than 10 % by weight, such as at most 5 % by weight of Ca-comprising silicate, based on the total weight of the mineral source material.

The inventors have found that the presence of such an amount of a Ca-comprising silicate in the mineral source material allows to reduce the amount of the Ca-comprising compound to be incorporated in the reactive mixture, i.e. the reactive mixture can comprise a higher percentage by weight of mineral source material and a lower amount of the Ca-comprising compound.

Advantageously, the mineral source material comprises a pyroxene having the general formula XY(Si,Al)₂O₆, wherein
X individually is Ca, Na, Fe(ll) or Mg; and
Y individually is Cr, Al, Mg, Co, Mn, Sc, Ti, V, Fe(ll) or Fe(III).

Advantageously, X and/or Y is/are Mg and the pyroxene comprises Si, i.e. the pyroxene advantageously is a Mg-comprising silicate. Advantageously, in particular when the pyroxene is a Mg-comprising silicate, the pyroxene is diopside (CaMgSi₂O₆; a mixed Ca-Mg silicate) or enstatite (MgSiO₃; a Mg-silicate).

Advantageously, the mineral source material comprises an amphibole having the general formula Z₇Si₈O₂₂(OH)₂, wherein Z individually is selected from the group consisting of: Ca, Mg, Na, Cr, Al, Co, Mn, Sc, Ti, V, Fe(ll) and Fe(III).

According to a second aspect of the present disclosure, there is provided a carbonatable binder composition as set out in the appended claims.

The carbonatable binder composition comprises or substantially consists of a mixed Ca-Mg silicate. The carbonatable binder composition comprises at least 10 % by weight, preferably at least 15 % by weight, more preferably at least 17.5 % by weight, most preferably at least 20 % by weight, for example at least 25 % by weight of akermanite (Ca₂MgSi₂O₇), based on the total weight of the carbonatable binder composition.

Advantageously, when the carbonatable binder composition is produced by means of the method of the first aspect of the invention, akermanite is formed during heating the reactive mixture, i.e. the formed akermanite is a result of the reaction of the Ca-comprising compound with the mineral source material, in particular with the Mg-comprising silicate comprises therein. It will be understood that the amount of akermanite in the carbonatable binder composition depends, amongst others, on the composition of the reactive mixture, and in particular on the composition of the mineral source material comprised in the reactive mixture.

Advantageously, the carbonatable binder composition comprises equal to or lower than 20 % by weight, preferably equal to or lower than 15 % by weight, more preferably equal to or lower than 10 % by weight, of other phases from the melilite group (i.e. phases from the melilite group excluding akermanite), based on the total weight of the carbonatable binder composition. The inventors have surprisingly discovered that the reactivity of such other phases from the melilite group have a very low, even substantially negligible, reactivity towards CO₂ in mild carbonation conditions, i.e. mild temperature (10 - 100 °C) and CO₂ pressure (at most 2 MPa), contrary to akermanite which has a surprisingly elevated reactivity towards CO₂ in such carbonation conditions.

Contrary to what is disclosed in the prior art, and thus known, the inventors have surprisingly discovered that akermanite can be carbonated (i.e. is not inert during carbonation). The inventors further surprisingly discovered that akermanite present in the binder composition strongly contributes to the mechanical strength, in particular the compressive strength, of the obtained carbonate bonded articles. The inventors further surprisingly discovered that small amounts of akermanite are capable of imparting a higher mechanical strength, in particular the compressive strength, of the obtained carbonated articles that cannot be obtained by the use of Ca silicates.

The inventors have further surprisingly discovered that contrary to akermanite, other phases of the melilite group do not seem to contribute to a large extent to the mechanical strength of the obtained carbonate bonded article, i.e. these phases seem to be more "inert" (i.e. non-reactive with CO₂ during carbonation).

Advantageously, the carbonatable binder composition comprises equal to or lower than 20 % by weight, preferably equal to or lower than 15 % by weight, more preferably equal to or lower than 10 % by weight, of merwinite (Ca₃MgSi₂O₈), monticellite (CaMgSiO₄) and diopside (CaMgSi₂O₆), based on the total weight of the carbonatable binder composition.

According to a third aspect of the present disclosure, there is provided a construction material composition as set out in the appended claims.

The construction material composition comprises the carbonatable binder composition according to the second aspect of the present disclosure or the carbonatable binder composition obtained by the method of the first aspect of the present disclosure.

The construction material composition advantageously further comprises typical compounds used in construction material compositions, such as sand, pebbles, aggregates, fibres, inert fillers and additives such as limestone filler, fine quarts and quartz flower.

The construction material composition is advantageously applied, i.e. added to or used in, construction materials, in particular concrete articles. Such concrete articles are advantageously used in applications including, but not limited to, infrastructure, construction, pavement, and landscaping industries.

According to a further aspect of the present disclosure, there is provided a method of reacting a carbonatable binder composition with CO₂, i.e. a carbonation reaction, as set out in the appended claims.

The carbonatable binder composition is according to the second aspect of the present disclosure or obtained by the method of the first aspect of the present disclosure.

The carbonatable binder composition is contacted with (exposed to, reacted with) CO₂ at a temperature between 10 °C and 100 °C and at a CO₂ pressure equal to or lower than 2 MPa. Contacting the carbonatable binder composition with CO₂ is advantageously performed by means and methods known in the art, such as passing a flow of CO₂ through the binder composition, or placing the binder composition in an environment comprising or substantially consisting of CO₂.

The present disclosure further relates to a carbonate bonded article obtained by this carbonation method. Advantageously, the carbonate bonded article has a compressive strength of at least 5 MPa, preferably at least 10 MPa.

An advantage of the foregoing methods of producing a carbonatable binder material is that the reactive mixture used to obtain the carbonatable binder composition can comprise a high amount, up to 90 % by weight, of Mg-comprising silicate comprising by-products or waste products from industrial processes. More, these by-products and waste products can be obtained from a wide variety of industrial processes. The inventive methods thus have a high valorisation potential of industrial by-products and waste products, while the valorisation possibilities of such waste streams have always been limited up to now.

An advantage of the carbonatable binder compositions of the present invention is that they can be carbonated at moderate conditions of temperature (10-100 °C) and CO₂ pressure (equal to or lower than 2 MPa), thereby reducing the energy consumption of the carbonation process. Without wishing to be bound by any theory, the inventors believe that this is realised due to the high amount of akermanite present in the binder composition.

Further, despite the mild carbonation conditions, the carbonate bonded articles obtained from the inventive carbonatable binder compositions show a high mechanical strength, in particular a compressive strength, which was surprisingly significantly higher than the mechanical strength of prior art carbonate bonded articles obtained by carbonation, in particular articles obtained by carbonation of other Mg-silicates, other mixed CaMg-silicates, or, surprisingly, even Ca-silicates at similar conditions, and equal to and even higher than the mechanical strength of prior art carbonate bonded articles obtained by carbonation at high temperature and/or high CO₂ pressure. Without wishing to be bound by any theory, the inventors believe that this is realised due to the akermanite present in the binder composition. The inventors surprisingly discovered that the presence of a limited amount of akermanite already suffices to achieve a high increase of the compressive strength upon carbonation, the increase being higher than expected from carbonation of corresponding Ca-silicates.

### Brief description of the figures

Aspects of the invention will now be described in more detail with reference to the appended drawings, wherein same reference numerals illustrate same features and wherein:
Figure 1 shows the compressive strength of carbonate bonded articles obtained from two binder compositions of the invention, carbonated at varying pressure and temperature.
Figure 2 shows the compressive strength of carbonate bonded articles obtained from binder compositions comprising various amounts of CaCOs, in function of the % by weight of CaCO₃.
Figure 3 shows the theoretical simulation of the phase composition of a binder composition of the invention in function of the amount of CaCO₃.
Figure 4 shows the theoretical simulation of the phase composition of another binder composition of the invention in function of the amount of CaCO₃.
Figure 5 shows the compressive strength of carbonate bonded articles obtained from inventive binder compositions comprising mine tailings and various amounts of CaCOs, in function of the % by weight of CaCO₃.
Figure 6 shows the theoretical simulation of the phase composition of yet another binder composition of the invention in function of the amount of CaCO₃.
Figure 7 shows the compressive strength of carbonate bonded articles obtained from inventive binder compositions comprising commercial Mg-silicate and various amounts of CaCOs, in function of the % by weight of CaCO₃.

### Description of embodiments

The reactive mixture heated to form (i.e. produce or manufacture) a carbonatable binder composition comprises between 40 and 90 % by weight of a mineral source material comprising or substantially consisting of a Mg-comprising silicate, and between 60 and 10 % by weight of a Ca-comprising compound, based on the total weight of the reactive mixture.

A wide variety of materials or compositions can be used as the Ca-comprising compound. Advantageously, the Ca-containing (or Ca-comprising) compound comprises or substantially consists of an industrial waste product, preferably originating from mining, quarrying, or cement sectors. The inventors believe that the chemical composition of the Ca-containing compound, i.e. the presence of calcium, and the reactivity with the mineral source material are the essential features of the Ca-comprising compound in the reactive mixture. In other words, the exact composition of the phase and the physical properties of the Ca-comprising material are considered less important for providing an optimal reactive mixture.

Advantageously, the Ca-comprising compound comprises or substantially consists of an inorganic Ca-comprising compound. Non-limiting examples of inorganic Ca-comprising compounds include Ca oxide, Ca nitrate, Ca sulphate, Ca carbonate, Ca phosphate, Ca chloride. A particularly preferred Ca-comprising compound is Ca-carbonate, in particular CaCO₃. The inventors have found that when the Ca-comprising compound comprises or substantially consists of CaCOs, the formation of phases that can react with CO₂ is accelerated during the heat treatment.

Alternatively, yet also advantageously, the Ca-comprising compound comprises or substantially consists of an organic Ca-comprising compound. Non-limiting examples of organic Ca-comprising compounds include Ca citrate, Ca oxalate, and Ca acetate.

Advantageously, the Ca-comprising compound is a particulate material, i.e. comprises solid particles. Advantageously, the particulate material has a particle size distribution having a d₅₀ value between 0.5 µm and 500 µm, preferably between 1 µm and 200 µm, more preferably between 2 µm and 150 µm, or between 5 µm and 100 µm, as measured by laser diffraction. It will be understood that the particle size and the particle size distribution can vary, depending on the source from which the Ca-comprising compound is provided, as well as any optional pre-treatments to obtain a certain average size or particle size distribution. For example, the reaction rate and yield of the heating operation can be improved by using a particulate Ca-comprising compound having a particle size distribution having a d₅₀ value between 5 µm and 75 µm, preferably between 10 µm and 40 µm, as measured by laser diffraction.

The molar ratio of elemental Mg to elemental Si in the mineral source material may vary depending on the mineral source material's composition, but will usually be between 10:1 and 1:10, preferably between 5:1 and 1:5, more preferably between 2:1 and 1:2.

An advantage of the present invention is that a wide variety of materials or compositions can be used as the mineral source material, as long as the molar ratio of elemental Mg to elemental Si in the mineral source material is between 10:1 and 1:10, preferably between 5:1 and 1:5, more preferably between 2:1 and 1:2. Non-limiting examples of suitable mineral source materials include naturally occurring minerals, industrial mineral waste streams and industrial mineral side products. Examples of suitable waste streams and side products (i.e. by-products) include, without being limited thereto, metallurgical slags (for example from ferronickel production), mine tailings (for example Mg-silicate comprising mine tailings) and leaching residues. It will be understood that mixtures of two or more of the foregoing can also be used as the mineral source material.

For example, mining operations targeting mafic and ultramafic rocks (which contain high levels of magnesium) may generate mixed Mg-silicate or Ca-Mg-silicate-comprising residues. For example, mining of mafic rocks can release a substantial amount of pyroxene and amphibole minerals (Mg-silicate or mixed CaMg-silicate) into tailings. Merwinite (3CaO·MgO·2SiO₂) is commonly found in steel slags. Olivine (2MgO·2FeO·SiO₂) is another mineral present in ferronickel slags or mine tailings that contributes to the magnesium silicate content.

Advantageously, the mineral source material is a particulate material, i.e. comprises solid particles. Advantageously, the particulate material has a particle size distribution having a d₅₀ value between 0.5 µm and 500 µm, preferably between 1 µm and 200 µm, more preferably between 2 µm and 150 µm, or between 5 µm and 100 µm, as measured by laser diffraction. It will be understood that the particle size and the particle size distribution can vary, depending on the source from which the mineral source material is provided, as well as any optional pre-treatments to obtain a certain average size or particle size distribution. For example, the reaction rate and yield of the heating operation can be improved by using a particulate mineral source material having a particle size distribution having a d₅₀ value between 5 µm and 75 µm, preferably between 10 µm and 40 µm, as measured by laser diffraction.

Advantageously, the mineral source material comprises at least 10 % by weight, preferably at least 15 % by weight, more preferably at least 20 % by weight of a pyroxene, based on the total weight of the mineral source material, wherein the pyroxene has the general formula XY(Si,Al)₂O₆, wherein
X individually is Ca, Na, Fe(II), Mg, Zn, Mg or Li, preferably Ca, Na, Fe(II) or Mg; and
Y individually is Cr, Al, Mg, Co, Mn, Sc, Ti, V, Fe(ll) or Fe(III).

Advantageously, Y (i.e. the Y ion) has a size equal to or lower than the size of X (i.e. the X ion).

Advantageously, at least one of X and Y is Mg, i.e. the pyroxene is a Mg-comprising pyroxene. When at least one of X and Y is Mg, the Mg-comprising silicate of the mineral source material advantageously comprises or substantially consists of the Mg-comprising pyroxene. It is known that Mg-comprising pyroxenes, in particular enstatite, MgSiO₃ (X=Y=Mg), show a high reactivity towards Ca-comprising compounds, in particular CaCOs, resulting in the formation of akermanite. Another advantageous pyroxene is diopside (CaMgSi₂O₆).

Advantageously, the mineral source material comprises at least 10 % by weight, preferably at least 15 % by weight, more preferably at least 20 % by weight of an amphibole, based on the total weight of the mineral source material, wherein the amphibole has the general formula Z₇Si₈O₂₂(OH)₂, wherein Z individually is selected from the group consisting of: Ca, Mg, Na, Cr, Al, Co, Mn, Sc, Ti, V, Fe(ll) and Fe(III).

Advantageously, at least one of Z is Mg, i.e. the amphibole is a Mg-comprising amphibole. It is known that Mg-comprising amphiboles show a high reactivity towards Ca-comprising compounds, in particular CaCOs, resulting in the formation of akermanite.

Amphiboles are generally considered as being detrimental to human health, but are often disposed of, despite their health risk. Consequently, the methods of the present disclosure allow to convert these products into a useful product that is no longer detrimental to human health, thereby providing a valorisation of such hazardous products.

Advantageously, the mineral source material further comprises equal to or lower than 20 % by weight of a Ca-comprising compound, based on the total weight of the mineral source material. Non-limiting examples of such a Ca-comprising compound include one or more of calcite, aragonite, chalk, limestone and dolomite.

The inventors have found that the presence of a Ca-comprising compound in the mineral source material allows to reduce the amount of the Ca-comprising compound that needs to be added to the mineral source material in the reactive mixture to form mixed Ca-Mg silicate(s).

However, the mineral source material advantageously comprises equal to or lower than 20 % by weight, preferably equal to or lower than 15 % by weight, more preferably equal to or lower than 10 % by weight of a Ca-silicate, based on the weight of the mineral source material. The inventors have found that the presence of a Ca-silicate in the mineral source material tends to limit the formation of akermanite, and thereby reduce the reactivity towards CO₂.

The mineral source material can further comprise an Fe-comprising compound. A non-limiting example of an Fe-comprising compound is a mixed Mg-Fe silicate such as olivine (general formula (Mg,Fe)₂SiO₄), a mixed Ca-Fe silicate (general formula (Ca,Fe)SiO₄), or a mixed Ca-Mg-Fe silicate (general formula Ca,Mg,Fe)₂SiO₄). A particular example of an olivine is fayalite (Fe₂SiO₄).

The presence of Fe-comprising compounds may favour the formation of compounds such as magnetite (Fe₃O₄) or hematite during the heating operation. However, magnetite and hematite are known to have a low reactivity towards CO₂, and thus a low carbonization rate.

Consequently, and advantageously, to favour the formation of mixed Ca-Mg-silicates during the heating operation, and in particular the formation of akermanite, the mineral source material comprises equal to or lower than 20 % by weight, preferably equal to or lower than 15 % by weight, more preferably equal to or lower than 10 % by weight, such as at most 5 % by weight of Fe, based on the total weight of the mineral source material, wherein the amount of Fe is expressed as Fe oxide in the mineral source material.

Advantageously, the Ca-comprising compound is added to the mineral source material, thereby obtaining a reactive mixture. Advantageously, the reactive mixture has a homogeneous composition, i.e. the mineral source material and the Ca-comprising compound are evenly distributed in the reactive mixture. The Ca-comprising compound can be added by means known in the art, such as by mixing.

Advantageously, the reactive mixture is heated in an atmosphere comprising at least 1 % of oxygen, preferably at least 5 %, more preferably at least 10 %. Non-limiting examples include air and a substantially pure O₂ atmosphere. Preferably, the heating operation is performed in air.

The carbonatable binder composition comprises at least 10 % by weight, preferably at least 15 % by weight, more preferably at least 20 % by weight, most preferably at least 25 % by weight, such as at least 50 % by weight or at least 75 % by weight of akermanite (Ca₂MgSi₂O₇), based on the total weight of the carbonatable binder composition. It is known in the art that akermanite is a crystalline compound.

The inventors have surprisingly discovered that akermanite shows a high reactivity towards CO₂ in the carbonation reaction. In particular, akermanite shows a high CO₂ uptake at a temperature equal to or lower than 100 °C and at a CO₂ pressure equal to or lower than 2 MPa (20 bar). Consequently, the presence of akermanite in the carbonatable binder composition was found to allow carbonation at moderate temperature and at moderate CO₂ pressure.

The inventors have further surprisingly discovered that the presence of even a small amount of akermanite in the carbonatable binder composition has a positive impact on the mechanical strength, in particular the compressive strength, imparted by the binder composition upon carbonation, as well as on the resistance against water of the carbonated article.

The carbonatable binder composition can further comprise an iron oxide, in particular one or more of FeO, Fe₂O₃, or a mixed Fe(II)-Fe(III) oxide. It is known that iron oxide in the carbonatable binder composition does not contribute to an improved the mechanical strength, in particular compressive strength, of carbonated articles upon carbonation of the carbonatable binder composition, the binder composition advantageously comprises equal to or lower than 20 % by weight, preferably equal to or lower than 15 % by weight, more preferably equal to or lower than 10 % by weight, most preferably equal to or lower than 5 % by weight of iron oxide, based on the total weight of the carbonatable binder composition.

The carbonatable binder composition can further comprise a Mg silicate, such as MgSiO₃ and Mg₂SiO₄. It is however known that such Mg silicates tend to have a rather low reactivity towards CO₂, and consequently the amount of Mg silicates in the binder composition is limited. Advantageously, when the binder composition comprises a Mg silicate, it comprises at most 40 % by weight, preferably at most 30 % by weight, more preferably at most 20 % by weight, most preferably at most 10 % by weight, such as 5 % by weight or less of the Mg silicate, based on the total weight of the carbonatable binder composition.

The binder composition can further comprise one or more of merwinite, monticellite and diopside. It is known that they have a limited reactivity towards CO₂ and show a lower contribution to the strength development upon carbonation of the binder composition when compared to akermanite, and consequently their presence in the carbonatable binder composition is equal to or lower than 20 % by weight, preferably equal to or lower than 15 % by weight, more preferably equal to or lower than 10 % by weight, most preferably equal to or lower than 5 % by weight, based on the total weight of the carbonatable binder composition.

Advantageously, the carbonatable binder composition is a particulate material, i.e. comprises solid particles. The method can optionally comprise a particle size reduction operation, wherein the particle size is reduced, e.g. by means of milling, to enhance the reactivity of the binder composition towards CO₂. Advantageously, the particles have a particle size distribution having a d₅₀ value equal to or lower than 50 µm, preferably equal to or lower than 40 µm, more preferably equal to or lower than 20 µm, as measured by means of laser diffraction. It will be understood that the desired or optimal particle size distribution, including the d₅₀ value, depends on the application or use of the carbonatable binder composition, i.e. on the carbonate bonded article to be obtained.

The present invention further relates to a method for producing a carbonate bonded article by carbonating the carbonatable binder composition of the invention. The method comprises a carbonation operation, and optionally a shaping operation prior to the carbonation operation.

The carbonation operation comprises contacting the carbonatable binder composition with CO₂ (i.e. exposing to), so that the binder composition reacts with the CO₂. Advantageously, upon exposure to CO₂, the akermanite and any other compounds that are reactive to CO₂ in the binder composition convert into a carbonate bonded article.

The carbonation operation is advantageously performed at a temperature between 10 °C and 100 °C, preferably between 20 °C and 90 °C, more preferably between 30 °C and 80 °C, such as between 50 °C and 70 °C.

The carbonation operation is advantageously performed at a CO₂ pressure equal to or lower than 10 MPa, preferably equal to or lower than 5 MPa, more preferably equal to or lower than 2 MPa.

Advantageously, the carbonation operation is performed at a temperature between 10 °C and 100 °C, preferably between 20 °C and 90 °C, and at a CO₂ pressure equal to or lower than 5 MPa, preferably equal to or lower than 2 MPa.

Advantageously, the carbonatable binder composition is exposed to a gas comprising at least 15 % by volume, preferably at least 30 % by volume, more preferably at least 50 % by volume, for example 75 % by volume or substantially 100 % by volume of CO₂.

Advantageously, the carbonation operation is performed by means and methods known in the art, such as passing a gas flow comprising or substantially consisting of CO₂ through the binder composition, or placing the binder composition in an environment comprising or substantially consisting of CO₂. A preferred method comprises placing the binder composition in a CO₂-comprising environment.

Advantageously, the carbonation reaction is performed without the active incorporation of water into the carbonatable water composition, i.e. the carbonation operation is advantageously a non-hydraulic binding operation.

The optional shaping operation comprises adding further compounds to the binder composition, such as - without being limited thereto - fillers such as limestone filler, fine quarts, quartz flower, nucleation agents and workability improvers. Advantageously, no hydraulic binder additives are added during the shaping operation. It will be understood that the selection of the further compounds and their amount depends on the purpose of the carbonate bonded article obtained after the carbonation operation.

In a particular embodiment, a construction material composition is prepared during the shaping operation by adding construction material additives to the carbonatable binder composition. Upon exposure of the construction material composition to CO₂ during the carbonation operation, a (carbonated) construction material is obtained. Non-limiting examples of suitable construction material additives include sand, mortar, pebbles and fibers.

The present disclosure further relates to a carbonated (i.e. carbonate bonded) article obtained by the carbonation method of the invention. Advantageously, the carbonate bonded article has a compressive strength of at least 5 MPa, preferably at least 10 MPa.

Non-limiting examples of carbonate bonded articles include carbonate bonded concrete, stone, clinkers, bricks and tiles. It will be understood that the article obtained depends on the composition of the binder composition, and more particularly of any compounds added during the optional shaping operation.

### Comparative example 1

Two slags remaining from nickel or iron-nickel production were provided. The chemical composition of both slags was analysed by means of Energy Dispersive X-ray Fluorescence (ED-XRF) analysis on powder of the slags. The % by weight of the elements are shown in Table 1 for elements present for at least 2 % by weight, based on the total weight of the slag, and are represented in the form of the oxide of the respective elements. Minor elements, i.e. elements being present in the slags in amounts below 2 % by weight, are mentioned under "Others" in Table 1. Slag 1 comprised significant amounts of FeO and SiO₂, while slag 2 mainly comprised SiO₂ and MgO.

**Table 1: chemical composition of two slags**

| | **FeO** | **SiO₂** | **CaO** | **Al₂O₃** | **MgO** | **Others** |
|---|---|---|---|---|---|---|
| **Slag 1** | 52 | 32 | 2 | 1 | 9 | 4 |
| **Slag 2** | 15 | 50 | 3 | 5 | 25 | 2 |

First, both slags were used "as received", i.e. without any further treatments or preparations, as reference binder compositions. Thereto, mixtures comprising slag 1 or slag 2, respectively, and 10 % by weight of moisture, based on the total weight of the mixtures, were prepared. The mixtures were shaped into cylinders of 23 mm diameter and 20 mm height, and were then carbonated by contacted them with a gaseous CO₂ atmosphere for 16 hours at six CO₂ pressure-temperature combinations. Three different pressures were tested - 10, 20 and 40 bar, and two temperatures were tested - 60 °C and 100 °C. Afterwards, the compressive strength was measured.

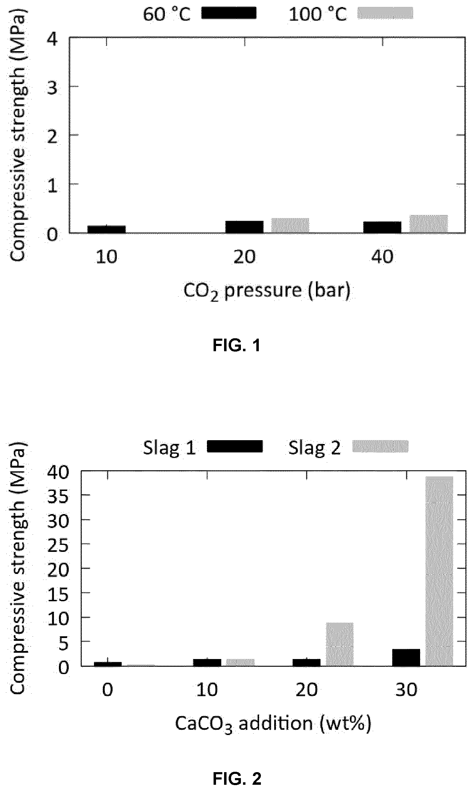

Figure 1 shows the compressive strength for the carbonate bonded articles obtained from slag 2. It is clear that low compressive strengths well below 0.5 MPa were measured. No compressive strength could be measured for the carbonate bonded article obtained by carbonation at 10 bar and 100 °C.

### Example 1

Carbonatable binder compositions were prepared from each of the two slags from Comparative example 1. For each slag, three mixtures were prepared by adding 10, 20 or 30 % by weight of CaCOs, based on the total weight of the respective mixture. The mixtures were then heated to 1300 °C in air at a heating rate of 3 °C/min and were then maintained at 1300 °C in air for 30 minutes. Afterwards, there were cooled at a cooling rate of 3 °C/min.

The obtained carbonatable binder compositions were then carbonated by contacted them with a gaseous CO₂ atmosphere for 16 hours at 10 bar and 60 °C, and their compressive strength was measured.

Figure 2 shows the compressive strength for the carbonate bonded articles in function of the amount of CaCO₃ added, wherein 0 wt.% CaCO₃ refers to the reference carbonate bonded articles obtained in comparative example 1 by carbonation at the same conditions. It is clear that for the carbonate bonded articles obtained from slag 2 a significant increase of the compressive strength was obtained by the addition of CaCO₃. The increase is larger with increasing amount of CaCOs, reaching values close to 40 MPa for 30 wt.% of CaCO₃. For slag 1 only a slight improvement was found, reaching compressive strengths of approx. 3 MPa for articles obtained with 30 wt.% of CaCO₃.

To better understand the impact of the addition of CaCOs, the phase composition of the binder composition and carbonate bonded articles comprising slag 2 was investigated using XRD. A PANalytical Empyrean was used with Rietveld for quantification and an external rutile standard for calculating the quantity of amorphous. HighScore 5.0 Plus software and the PDF-4 database supported the analyses.

Table 2 shows the results, the values being the % by weight based on the total weight of the carbonatable binder composition or carbonated article, respectively.

**Table 2: Phase composition of carbonatable binder compositions and carbonated articles comprising slag 2**

| | **Binder composition** | | | | **Carbonated article** | | | |
|---|---|---|---|---|---|---|---|---|
| **CaCO₃ (wt.%)** | **0** | **10** | **20** | **30** | **0** | **10** | **20** | **30** |
| Akermanite (Ca₂MgSi₂O₇) | 0 | 0 | 5 | ***18*** | 0 | 0 | 2 | ***6*** |
| Forsterite (Mg₂SiO₄) - Fe-rich | 14 | 24 | 27 | 26 | 14 | 24 | 26 | 21 |
| Enstatite (Mg₂Si₂O₆) | 59 | 28 | 10 | 8 | 59 | 28 | 12 | 7 |
| Diopside (CaMgSi₂O₆) | 0 | 31 | 29 | 13 | 0 | 31 | 25 | 9 |
| Dolomite (CaMg(CO₃)₂) | 0 | 0 | 0 | 0 | 0 | 0 | 2 | 5 |
| Spinel | 2 | 1 | 1 | 1 | 2 | 1 | 1 | 1 |
| Amorphous/unimportant | 25 | 16 | 28 | 34 | 25 | 16 | 30 | 52 |

It was noticed that the composition of the binder comprising no CaCo3 (reference of comparative example 1) and 10 wt.% CaCO3 was not changed significantly upon carbonation, which explains the low compressive strengths measured, indication that almost no carbonation took place. Further, for all phases except akermanite there was no significant change in amount upon carbonation.

However, it was surprisingly noticed that only from 20 wt.% CaCO₃ on the binder compositions did comprise akermanite, up to 18 wt.% for the binder composition obtained by adding 30 wt.% CaCO₃ to slag 2. Further, upon carbonation, the amount of akermanite significantly decreased while the obtained articles showed high compressive strengths, the highest strength being obtained from the binder composition comprising the highest amount of akermanite.

Further analysis of the results learned that akermanite presented in the thermally treated mixture had reacted for about 2/3, while other phases are within the error of the XRD measurement. Dolomite is formed as main reaction product in the binder after carbonation, although in other cases also minor quantities of aragonite were found, while the silica present in the akermanite was transformed into amorphous silica.

The binder composition obtained from slag 2 was further optimized to increase its amount of akermanite by optimizing the amount of CaCO₃ added.

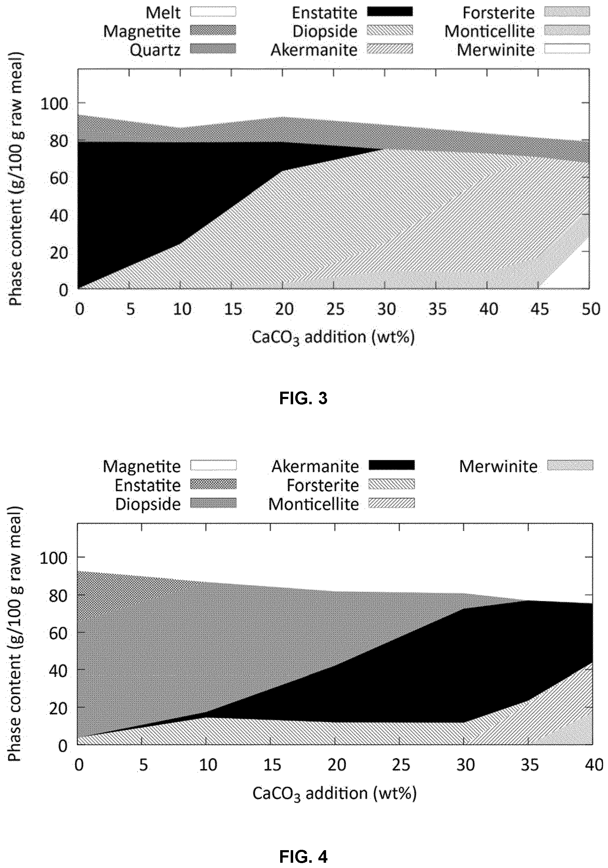

Further optimization of the akermanite content was calculated theoretically using FactSage thermodynamic simulations in the Equilibrium module of FactSage 8.0 using the Fact Pure Substances and FT Oxid databases. A constant oxygen partial pressure of 0.1 was implemented to simulate the conditions in a clinkering furnace. The phase composition as function of CaCO₃ addition is shown in Figure 3. A maximal akermanite content is simulated at a CaCO₃ addition of 40-45 wt%.

The optimization was then experimentally validated by preparing mixtures comprising 40, 45 and 50 wt.% of CaCO₃. The mixtures were then heated in the same way as the thermal treatment of Example 1. The phase composition of the obtained binder compositions was then investigated in the same way as described in Example 1 (Table 3).

**Table 3: Phase composition of carbonatable binder compositions comprising slag 2**

| **CaCO₃ (wt.%)** | **40** | **45** | **50** |
|---|---|---|---|
| Akermanite (Ca₂MgSi₂O₇) | 49 | ***66*** | ***66*** |
| Forsterite (Mg₂SiO₄) | 8 | 4 | 5 |
| Diopside (CaMgSi₂O₆) | 27 | 12 | 4 |
| Magnetite (Fe₃O₄) | 14 | 15 | 15 |
| Wollastonite (CaSiO₃) | 0 | 1 | 2 |
| Merwinite (Ca₃MgSi₂O₈) | 2 | 3 | 8 |

From Table 3 it is clear that the highest wt.% of akermanite were effectively obtained when 45 to 50 wt.% CaCO₃ was added to slag 2 prior to the thermal treatment to obtain the carbonatable binder composition. This, together with the amounts of the other phases, confirms the theoretical calculation represented in Figure 3.

The binder compositions were then also carbonated in the same way as described in Example 1 (60 °C and 10 bar), and the compressive strength was measured. The carbonated article obtained from the binder composition obtained from a mixture comprising 45 wt.% CaCO₃ (the binder composition itself comprising 66 wt.% akermanite) has a compressive strength of almost 80 MPa, or twice as high as the binder composition obtained from a mixture comprising 30 wt.% CaCO₃ (the binder composition itself comprising 18 wt.% akermanite). Such high compressive strengths of 80 MPa are higher than what is typically required for construction materials. This means that the binder composition obtained by thermal treatment of a mixture of the slag 2 and CaCO₃ could be diluted with filler material to obtain an economic construction material.

### Example 2

A vast supply of source material can also be found in tailings, which often contain pyroxenes and/or amphiboles. By mixing pyroxenes and amphiboles with CaCO₃ and heat treating the mixture, akermanite can be formed. From Example 1 it is known that akermanite in the binder composition significantly contributes to the compressive strength of articles obtained after carbonation of the binder composition at moderate conditions of 10 bar CO₂ and 60 °C.

To investigate the use of such tailings, a phase composition simulation was performed for tailings mixed with a varying amount of CaCO₃ (from 0 to 40 wt.%) and subsequently heat treated in air at 1200 °C. Figure 4 shows the theoretical simulation, from which it is clear that substantial wt.% of akermanite can be formed, starting from 10 wt.% of CaCO₃ in the mixture, and with highest akermanite concentrations for 30 wt.% CaCO₃.

This means that the binder composition obtained by thermal treatment of a mixture of the tailings and CaCO₃ could be diluted with filler material to obtain an economic construction material.

The optimization was then experimentally validated by preparing mixtures comprising 20, 25, 30 and 35 wt.% of CaCO₃. The mixtures were then heated to 1200 °C in air, thereby obtaining carbonatable binder compositions. The phase composition of the binder compositions was then investigated in the same way as described in Example 1 (Table 4).

**Table 4: Phase composition of carbonatable binder compositions from tailings**

| **CaCO₃ (wt.%)** | **20** | **25** | **30** | **35** |
|---|---|---|---|---|
| Akermanite (Ca₂MgSi₂O₇) | ***37*** | ***53*** | ***46*** | ***36*** |
| Forsterite (Mg₂SiO₄) | 9 | 9 | 7 | 6 |
| Diopside (CaMgSi₂O₆) | 46 | 29 | 21 | 13 |
| Magnetite (Fe₃O₄) | 8 | 8 | 8 | 9 |
| Merwinite (Ca₃MgSi₂O₈) | | 1 | 15 | 33 |
| Monticellite (CaMgSiO₄) | | 1 | 3 | 3 |

From Table 4 it is clear that when mine tailings are used as mineral source material, an optimal akermanite content of 53-46 wt.% was reached in the carbonatable binder compositions with the addition of 25-30 wt.% CaCO₃ to the reactive mixture. This, together with the amounts of the other phases, confirms the theoretical calculation represented in Figure 3.

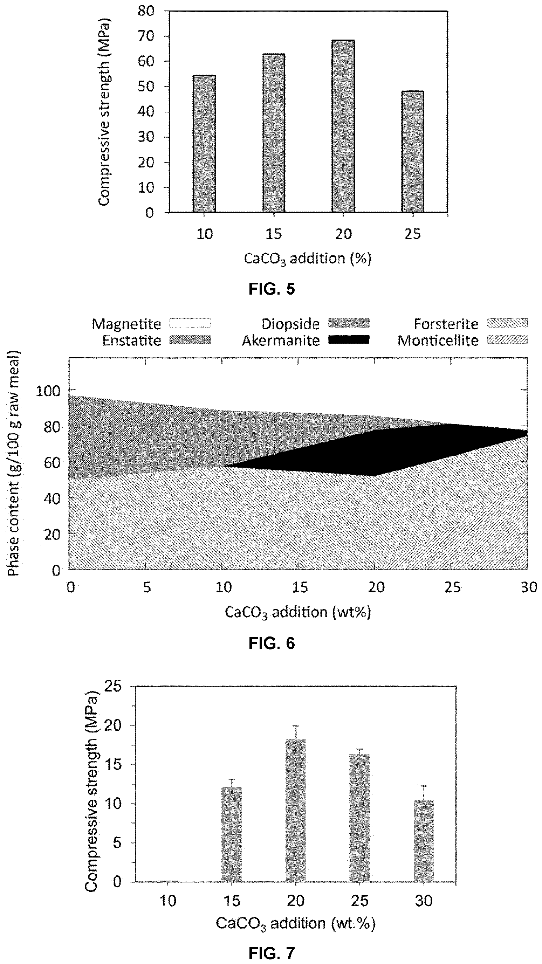

The binder compositions were then also carbonated in the same way as described in Example 1 (60 °C and 10 bar), and the compressive strength was measured. Figure 5 shows that the carbonatable binder compositions with the highest akermanite content provide the highest compressive strength, with values of 60 MPa to even 70 MPa. Surprisingly, the carbonatable binder composition with a large amount of merwinite (35 wt.% CaCO₃ addition, 33 wt.% of merwinite and 36 wt.% of akermanite) shows a lower compressive strength (50 MPa) - although still high - than the high akermanite carbonatable binder compositions (25-30 wt.% CaCOs). Similarly, the carbonatable binder composition with a large amount of diopside (20 wt.% CaCO₃ addition, 46 wt.% of diopside and 37 wt.% of akermanite) also shows a lower compressive strength (approx. 54 MPa) - although still high - than the high akermanite carbonatable binder compositions (25-30 wt.% CaCOs). This confirms that akermanite is the main carbonation-reactive phase responsible for the strength development in the carbonate bonded articles.

### Example 3

A commercially available Mg-silicate was also tested. Table 5 shows the chemical composition as analysed by means of ED-XRF analysis on powder of the Mg-silicate. The % by weight of the elements are shown in Table 5 for elements present for at least 2 % by weight, based on the total weight of the slag, and are represented in the form of the oxide of the respective elements. Minor elements, i.e. elements being present in the slags in amounts below 2 % by weight, are mentioned under "*Others*" in Table 5. The loss on ignition (LOI) comes from the decomposition of hydrous Mg-silicates. The Mg/Si molar ratio was above 1.

**Table 5: Chemical composition of the commercial Mg-silicate**

| Fe₂O₃ | SiO₂ | CaO | Al₂O₃ | MgO | LOI | Others |
|---|---|---|---|---|---|---|
| 7 | 39 | 2 | 3 | 37 | 10 | 2 |

To investigate the use of the Mg-silicate in obtaining carbonatable binder compositions allowing to provide carbonate bonded articles having a high compressive strength, a phase composition simulation was performed for the Mg-silicate mixed with a varying amount of CaCO₃ (from 0 to 30 wt.%) and subsequently heat treated in air at 1200 °C. Figure 6 shows the theoretical simulation, from which it is clear that substantial wt.% of akermanite can be formed, starting from 10 wt.% of CaCO₃ in the mixture, and with highest akermanite concentrations for 20 wt.% CaCO₃.

The theoretical simulation was then experimentally validated by preparing mixtures comprising the Mg-silicate and 10, 15, 20, 25 and 30 wt.% of CaCO₃. The mixtures were then heated in the same way as the thermal treatment of Example 1. The phase composition of the obtained binder compositions was then investigated in the same way as described in Example 1 (Table 6).

**Table 6: Phase composition of carbonatable binder compositions comprising the commercial Mg-silicate**

| | **Binder composition** | | | | |
|---|---|---|---|---|---|
| **CaCO₃ (wt.%)** | **10** | **15** | **20** | **25** | **30** |
| Akermanite (Ca₂MgSi₂O₇) | 0 | 10 | ***24*** | ***28*** | 19 |
| Monticellite (CaMgSiO₄) | 0 | 0 | 0 | 15 | 21 |
| Magnetite (Fe₃O₄) | 3 | 4 | 7 | 8 | 7 |
| Forsterite (Mg₂SiO₄) | 63 | 60 | 57 | 42 | 28 |
| Diopside (CaMgSi₂O₆) | 34 | 26 | 12 | 3 | 0 |
| Periclase (MgO) | 0 | 0 | 0 | 1 | 4 |
| Merwinite (Ca₃MgSi₂O₈) | 0 | 0 | 0 | 4 | 19 |
| Belite (Ca₂SiO₄) | 0 | 0 | 0 | 0 | 2 |

From Table 6 it is clear that the highest wt.% of akermanite were effectively obtained when 20 to 25 wt.% CaCO₃ was added to the Mg-silicate prior to the thermal treatment. This, together with the amounts of the other phases, confirms the theoretical calculation represented in Figure 6.

The binder compositions were then carbonated in the same way as described in Example 1 (60 °C and 10 bar), and the compressive strength was measured (Figure 7). From Figure 7 it is clear that the carbonate bonded article obtained from the binder composition obtained from a mixture comprising 20 wt.% CaCO₃ (the binder composition itself comprising 24 wt.% akermanite) has a compressive strength of 18 MPa, whereas even with less optimal wt.% of CaCO₃ compressive strengths of at least 10 MPa were obtained, with the exception of the addition of 10 wt.% CaCO₃-which was expected since from Table 6 it is clear that adding 10 wt.% CaCO₃ to the Mg-silicate did not result in any akermanite being formed.

Surprisingly, further increasing CaCO₃ addition to 30 wt.% was not beneficial, despite the formation of well-known carbonatable phases such as merwinite (19 wt.%), belite (2 wt.%), and periclase (4 wt.%). The 30 wt.% of CaCO₃ addition resulted in a decrease in the akermanite content in the binder composition and in lower compressive strength in the carbonated cylinder. This confirms that akermanite is the main carbonation-reactive phase responsible for the strength development in the carbonated articles.

## Claims

1. A method for producing a carbonatable binder composition comprising a mixed Ca-Mg silicate, wherein the method comprises forming a mixed Ca-Mg silicate by heating a reactive mixture to a temperature between 800 °C and 1400 °C, thereby obtaining the carbonatable binder composition comprising the mixed Ca-Mg silicate, wherein the reactive mixture comprises:
- between 40 and 90 % by weight of a mineral source material comprising a Mg-comprising silicate, and
- between 60 and 10 % by weight of a Ca-comprising compound,
wherein the percentage by weight of each component of the reactive mixture is based on the total weight of the reactive mixture,
**characterized in that** a molar ratio of elemental Mg to elemental Si in the mineral source material is between 5:1 and 1:5, and **in that** the Ca-comprising compound is capable of reacting with the Mg-comprising silicate.

2. The method according to claim 1, wherein the Ca-comprising compound comprises a Ca-comprising carbonate, preferably one or more of calcite, aragonite, chalk, limestone or dolomite.

3. The method according to claim 2, wherein the Ca-comprising carbonate comprises CaCO₃.

4. The method according to any one of the preceding claims, wherein the Mg-comprising silicate is MgSiO₃ or Mg₂SiO₄.

5. The method according to any one of the preceding claims, wherein the mineral source material further comprises equal to or lower than 20 % by weight of Fe, based on the total weight of the mineral source material, wherein the amount of Fe is expressed as Fe oxide in the mineral source material.

6. The method according to any one of the preceding claims, wherein the mineral source material comprises equal to or lower than 20 % by weight of a Ca-comprising silicate, based on the total weight of the mineral source material.

7. The method according to any one of the preceding claims, wherein the mineral source material comprises a pyroxene having the general formula XY(Si,Al)₂O₆, wherein
X individually is Ca, Na, Fe(ll) or Mg; and
Y individually is Cr, Al, Mg, Co, Mn, Sc, Ti, V, Fe(ll) or Fe(III).

8. The method according to claim 7, wherein the pyroxene is diopside (CaMgSi₂O₆) or enstatite (MgSiOs).

9. The method according to any one of the preceding claims, wherein the mineral source material comprises an amphibole having the general formula Z₇Si₈O₂₂(OH)₂, wherein Z individually is selected from the group consisting of: Ca, Mg, Na, Cr, Al, Co, Mn, Sc, Ti, V, Fe(ll) and Fe(III).

10. A carbonatable binder composition comprising a mixed Ca-Mg silicate, **characterized in that** the carbonatable binder composition comprises at least 10 % by weight of akermanite (Ca₂MgSi₂O₇), based on the total weight of the carbonatable binder composition.

11. The carbonatable binder composition according to claim 9, further comprising equal to or lower than 20 % by weight of other phases from the melilite group, based on the total weight of the carbonatable binder composition.

12. The carbonatable binder composition according to any one of claims 10 to 11, comprising equal to or lower than 20 % by weight of merwinite (Ca₃MgSi₂O₈), monticellite (CaMgSiO₄) and diopside (CaMgSi₂O₆), based on the total weight of the carbonatable binder composition.

13. A construction material composition, comprising the carbonatable binder composition according to any one of claims 10 to 12.

14. A method of producing a carbonate bonded article, comprising contacting a composition comprising the carbonatable binder composition obtained with the process of any one of claims 1 to 9 or the carbonatable binder composition of any one of claims 10 to 12 with CO₂ at a temperature between 10 °C and 100 °C and at a CO₂ pressure equal to or lower than 2 MPa.

15. A carbonate bonded article obtained by the method of claim 14, wherein the carbonate bonded article has a compressive strength of at least 5 MPa, preferably at least 10 MPa.
